# EUROPEAN PATENT SPECIFICATION

(11) **EP 1 462 687 B1**
(45) Date of publication and mention of the grant of the patent: **07.06.2006**
(21) Application number: 04251771.4
(22) Date of filing: 26.03.2004
(51) Int. Cl.: F16J 15/32

(54) **A lip seal**
Lippendichtung
Joint à lèvres

(30) Priority: 26.03.2003 GB 0306963; 31.10.2003 GB 0325507
(43) Date of publication of application: 29.09.2004
(73) Proprietor: JAMES WALKER & COMPANY LIMITED, Woking Surrey GU22 8AP (GB)
(72) Inventor: Armour, James Edward Gordon, Knaphill Woking Surrey GU21 2DG (GB); Hankin, Alon, Brigham Cockermouth Cumbria CA14 0TJ (GB); Elliott, Godfrey Duncan, Guildford Surrey GU1 1QT (GB)
(74) Representative: Moir, Michael Christopher

(56) References cited:
- DE-A- 2 643 769
- DE-B- 1 111 002

## Description

The invention relates to a lip seal, for example, in the form of an elastomeric annular ring, used either singly or in an arrangement of two or more units, to seal the space between two relatively movable coaxial members for example a rotating shaft and a stationary member surrounding the shaft. Typical applications include mineral extraction and processing, shallow water dredging and tunnel boring.

Traditional sealing arrangements for highly abrasive media generally consist of a number of basic u-ring type lip seals manufactured from either a rubber proofed fabric composite material, a suitable elastomeric compound or a combination of both. In order to protect the dynamic interface between the sealing edge of the lip and the rotating shaft from excessive wear associated with the build up of abrasive material at this point, a suitable fluid, usually a grease, is pumped between the shaft and the sealing lip to wipe away the debris.

In addition to the abrasive nature of the media encountered in applications of this type, the media may be pressurized to levels far above that which a single rotary lip seal can withstand without damage. To overcome this problem, the environmental pressure is reduced in stages across a number of separate seals. To achieve this a lubricating fluid, such as grease or oil, is injected at a controlled pressure through the seal housing and lantern rings into each inter-seal cavity to provide a support to the sealing lips, reducing the differential pressure per seal to an acceptable level.

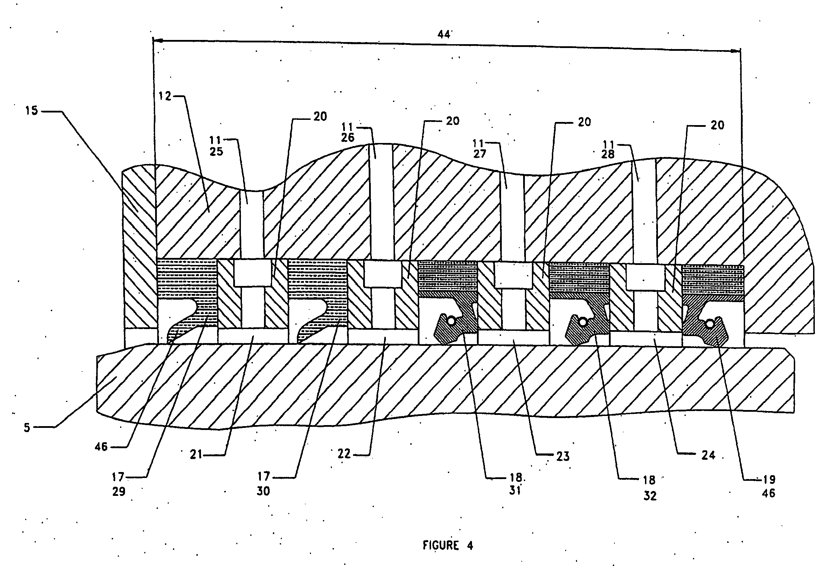

Figure **4** shows a traditional abrasive media sealing arrangement consisting of a number of specialized abrasion resistant seals **17**, facing the medium, which may be used in conjunction with standard spring energized seals **18**. Although these seals **18** are capable of sealing higher differential pressures they exhibit poor abrasion resistance. One of these **19** may face away from the medium to seal gear oil.

A suitable lubricating medium is injected though each housing port **11** and lantern ring **20** into the inter-seal cavities **21,22,23,24** at a controlled pressure. The first port **25** is used to inject a medium at a pressure greater than environmental pressure into the first inter-seal cavity **21** in order to flush beneath the sealing lip **46** of the first seal in the arrangement **29**. Subsequent ports **26,27,28** are used to inject a medium through the lantern rings **20** and into the inter-seal cavities **22,23,24** at a pressure sufficient to support the sealing lips of the remaining seals **30,31,32,46** at a differential pressure below the maximum differential pressure for that particular design of seal.

In related art, DE-A-2643769 discloses a lip seal for sealing against a shaft surface. The lip seal consists of a sealing lip and a shield between which a fluid may be injected. DE-A-1111002 discloses a lip seal for providing a water seal where water is provided under pressure between the two seals of the lip seal to clear any debris therebetween.

There are serious limitations to traditional sealing systems of this type:
1) Debris can accumulate and become compacted in the groove of the seal. This limits the flexibility of the seal lip, increasing frictional heat generation and reducing the life of the seal.
2) Existing abrasive media seals are designed either with highly flexible sealing lips to accommodate large degrees of shaft offset, but reducing differential pressure capability, or less flexible lips capable of higher pressures but lower shaft offset.
3) Traditional sealing arrangements, consisting of a number of seals and separate lantern rings, require a minimum axial housing volume to be made available in the machine, dependant on environmental pressure. The greater the axial volume required, the higher the costs of manufacturing the machine.
4) Machines with a pre-determined amount of space available for a sealing arrangement will be restricted to operating at limited environmental pressures, dictated by the maximum number of seals and lantern rings that can be accommodated.

In at least one of its preferred embodiments, the present invention is intended to overcome the above problems.

One aspect of the present invention provides a lip seal having a sealing lip adapted for sealing engagement at an end thereof with a relatively movable surface to separate a sealed region from an unsealed region, and a shield coextensive with the sealing lip on the unsealed side thereof to protect the sealing lip from the unsealed region and to define a space with the lip, and means permitting the injection under pressure of fluid into the space, the shield having an end disposed such that the fluid exits the space by passing between the lip and the shield end into the unsealed region, characterised in that: the shield and sealing lip are normally closed together, the fluid in use being injected at sufficient pressure to cause the shield and sealing lip to open and allow the fluid to flow towards the end of the sealing lip.

The shield may be in the form of a shield lip.

In a further aspect a seal assembly consists of at least one lip seal as set forth above disposed between relatively movable parts to define a sealed and an unsealed region. The most common form of seal in which the invention may be used is an annular seal for installation between relatively rotatable substantially coaxial parts eg a shaft passing through a housing. Thus the seal may be held statically in a rigid housing bore through a combination of an interference fit on the outer diameter of the seal and a designed axial compression of the seal. Sealing of a rotating shaft is effected by an interference fit of the primary sealing lip on the shaft plus pressurisation of the lip on to the shaft by the injected fluid. The pressure of the injected fluid must exceed that of the ambient environment into which the fluid passes to enable it to exit the space between the lip and the shield.

It will be appreciated that the seal assembly may be provided between a stationary shaft and a structure rotatable thereon, or indeed between two parts both of which may rotate. It also may be used where there is relative linear (eg reciprocating) motion between the two parts, either instead of or in addition to rotary motion. The invention can also be used in a face seal between two relatively movable radially extending surfaces and in applications in which the seal is not of annular shape eg between relatively sliding surfaces which are not bodies of rotation. The invention may also be used in "split seals" in which the ends of a length of profiled sealing material are joined to form an annular seal.

Thus in general any of these arrangements results in the sealing lip being in sealing engagement with a surface with which it has relative rotational and/or linear motion. Such a surface is referred to herein for convenience as a "relatively movable surface" or a "relatively moving surface" even if in a particular case the surface is stationary and it is the sealing lip which is moving.

Accordingly, in another aspect the invention provides use of a pressurized flow of fluid directed along an external surface of a sealing lip according to previously described aspects of the invention towards an end thereof in sealing engagement with a relatively moving surface to remove debris accumulated at the end of the sealing lip.

In one form, the sealing means comprises a first member having the lip and a second member having the shield. The first member may comprise a further shield positioned on a side of the lip opposite the second member. Preferably, the second member comprises a further lip positioned on a side of the shield remote from the first member. Preferably, the first member is unitary with its lip and further shield, and the second member is unitary with its shield and further lip.

The requirement for a continuous purge of a grease or other suitable fluid medium to remove abrasive debris from the sealing lip/ shaft interface is met by an internal flush system. The medium may be injected through the centre of the seal and vented between the primary sealing lip and a secondary valve or vent lip which acts as a flexible valve or throttle, in positive contact with the primary sealing lip when not pressurised. These two lips meet in such a way that the venting occurs in a region adjacent to the sealing lip/ shaft interface.

The primary sealing lip is forced towards the vent lip under normal operating conditions, forming a fluid-tight seal in one direction of fluid-flow, and is lifted from it only by the grease venting across the end of the primary sealing lip. The vent lip therefore forms a barrier, not allowing abrasive debris to reach the internal envelope of the seal, protecting the groove of the primary sealing lip from the ingress and subsequent compaction of the debris. The geometry of the top surface of the primary sealing lip is designed such that the vent lip rides smoothly over it under shaft offset conditions, maintaining contact at all times.

The self-venting functionality of the invention can facilitate a reduction in the number of units required to seal against a given ambient or environmental pressure when compared with traditionally vented systems. Traditional arrangements require the venting medium to be introduced through a lantern ring into the cavity between the primary and secondary seal. In this way, the medium may be pumped underneath the sealing lip of the primary seal at a pressure sufficient to overcome both the environmental pressure acting on the sealing lip and also the interference between the sealing lip and the shaft. The main implication of this venting method is that the pressure in the first inter-seal cavity must be greater than the environmental pressure to achieve venting. This higher pressure must then be stepped down across a number of subsequent seals, at an acceptable differential pressure per unit. The invention employs an internal venting system. This means that the medium injected into the first inter-seal cavity need only be at a pressure high enough to support the sealing lip of the primary sealing lip onto which the pressure of the venting medium, being injected through the seal, is acting. The pressure in the first inter-seal cavity will therefore be significantly lower than the environmental pressure and within the differential pressure capability of the primary seal.

As the pressure required in the first inter-seal cavity is lower, so fewer seals are required to step it down. For a given environmental pressure, fewer units will be required than would be for a traditional sealing arrangement. This has the benefit of reducing equipment/ machine manufacturing costs and allowing existing machines to be operated at higher environmental pressures with only minor modification.

In traditional abrasive media seal designs the lip can be very flexible to accommodate high levels of shaft offset. These long, flexible sealing lips present a large area to applied fluid pressure. The sealing lips may be flattened onto the shaft if a modest pressure is exceeded, increasing contact area and frictional heat generation. This could lead to premature seal failure and so maximum differential pressures are strictly limited. The invention can retain the shaft offset accommodation of the long, flexible lip design, while reducing the area exposed to applied fluid pressure - the vent lip presenting a much smaller area than the primary sealing lip. This can allow a higher differential pressure per seal.

The metallic rings used to separate the seals in a traditional sealing arrangement must contain the grooves and holes necessary to carry the injected medium from the housing into the inter-seal cavity. These design restrictions impose a minimum axial depth on these rings. The rings which separate the seals in an arrangement containing multiple units of the invention are essentially spacer rings, containing no holes or grooves, and so the axial length of these rings may be reduced significantly, saving on axial space and therefore manufacturing costs.

The reinforced elastomeric compound preferably utilized in the invention resists the extension of the seal under its own weight during fitting. This can occur at larger diameters where the seal diameter to cross-sectional area ratio is high. Unlike traditional rubber proofed fabric composite materials, this reinforced elastomeric compound can be easily joined to form complete endless rings when seal diameters are so large that manufacturing limitations allow only split seals to be moulded. This can offer a significant benefit over large abrasive media seals containing rubber proofed fabric which can tend to split during fitting or in service due to join weakness.

Another aspect of the invention provides an element for use in a lip seal of previously described aspects, the element comprising:
a body portion;
a sealing lip depending from the body portion, the sealing lip being adapted for sealing engagement at an end thereof with a relatively movable surface to separate a sealed region from an unsealed region; and
a shield depending from the body portion, the shield being coextensive with the sealing lip and being disposed on the sealed side of the sealing lip, the element being configured to abut a further said element so that the shield provides, with the lip of the further element, a lip seal as set forth above.
Another aspect of the invention provides a method of protecting a lip seal from contamination, the lip seal comprising resilient sealing means having a sealing lip adapted for sealing engagement at an end thereof with a relatively moving surface, the method comprising providing a shield coextensive with the sealing lip, the shield allowing fluid injected into a space between the lip and the shield to exit the space by passing between the lip end and an end of the shield, characterised in that:
the shield and sealing lip are normally closed together, the fluid in use being injected at sufficient pressure to cause the shield and sealing lip to open and allow the fluid to flow towards the end of the sealing lip .

Other advantageous features are as set out in the dependent claims, the description given below and the appended drawings.

Preferred features of the present invention will now be described with reference to the accompanying drawings, in which:
Figure 1 shows a cross section of an annular seal according to an embodiment of the present invention;
Figure 2 shows a cross section of the seal illustrated in Figure 1 fitted into a suitable housing;
Figure 3 shows a plan view demonstrating how the internal ports of the seal illustrated in Figure 1 would typically be distributed;
Figure 4 shows a typical traditional sealing arrangement for a high pressure abrasive medium application;
Figure 5 shows a sealing arrangement for the same high pressure application using the seal of Figure 1; and
Figure 6 shows another sealing arrangement for the same high pressure application using an alternative embodiment of the seal according to the present invention.

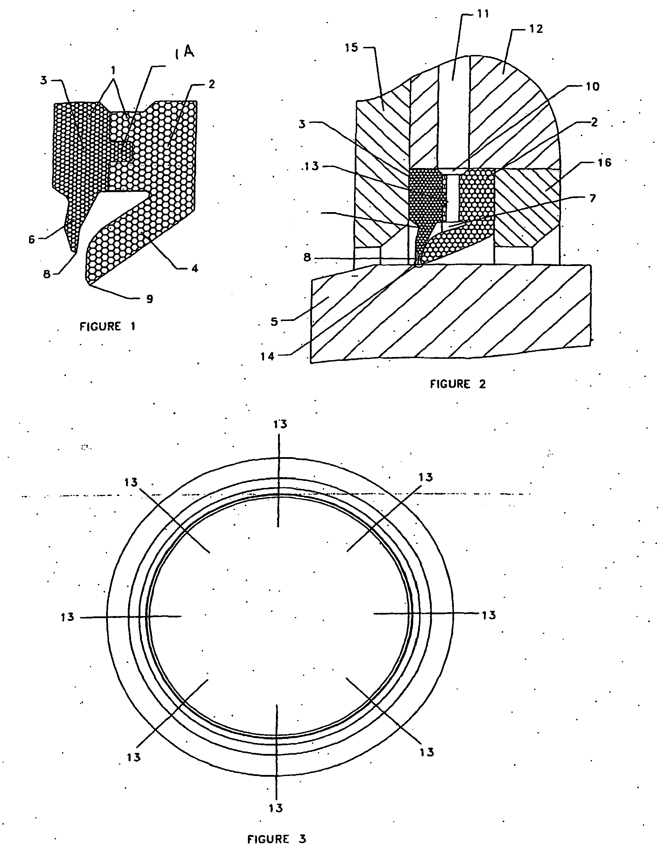

With reference to Figure 1, one preferred embodiment of the lip seal according to the present invention consists of an element having first and second resilient annular members in the form of a two-piece annular ring **1**, one component **2** being manufactured from a suitable elastomeric compound and the second **3** from a reinforced elastomeric compound.

The elastomeric component **2** incorporates a sealing lip in the form of a primary sealing lip **4** which has an interference fit on a shaft **5**, as illustrated in Figure 2. The reinforced elastomeric component **3** is securely fixed to this by a flange and groove **1A** and incorporates a shield in the form of a secondary vent lip **6** which encloses a space or groove **7** of the primary sealing lip **4** when fitted in a housing **12**. The inner diameter **8** of the vent lip **6** rests radially close to the sealing edge **9** of the primary lip **4** when fitted to the shaft **5**.

The reinforced nature of the compound of the second component **3** can aid in installing the seal on the shaft **5**. In one alternative embodiment, components **2** and **3** are homogenous, being made from the same compound, preferably either an elastomeric or reinforced elastomeric compound.

The lip seal is configured to allow either the shaft **5** to be rotatable therein, or the lip seal to be rotatable on the shaft **5**. Alternatively or in addition the shaft may be movable axially, or linearly, with respect to the lip seal, such as in an axial reciprocating motion.

On the outer diameter of the seal is located an endless circumferential groove **10**. This is designed to coincide axially with ports **11** in the seal housing **12** through which a suitable medium is injected at a controlled pressure. This medium is then allowed to flow around this circumferential groove **10**, and through equally spaced ports **13** within the body of the seal to allow the medium to flow circumferentially around the enclosed space formed by the groove **7** and the lips **4, 6**. The pressure forces the vent lip **6** to flex allowing the medium to flow into the sealing zone **14**, removing abrasive debris. Also, the vent lip **6** prevents contaminant such as unwanted or used lubricant, for example, from returning, or moving back past the vent lip **6** to the primary lip **4**. The body of the ring **1** is retained between a front plate **15** and a spacer ring **16**.

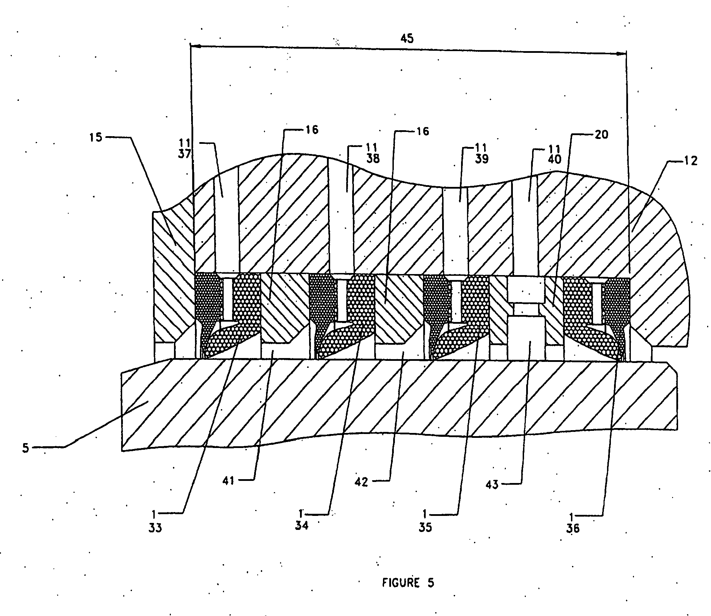

For a sealing arrangement comprising multiple units of the invention three forward facing seals **33,34,35** may be provided in addition to one rear facing unit **36** to seal gear oil, as per Figure 5. A suitable medium is injected through the primary seal **33**, via the first housing port **37** at a pressure above environmental pressure to effect a flush. Subsequent ports **38,39** are used to inject a lubricating medium through the secondary and tertiary seals **34,35** and into the inter-seal cavities **41,42** to support the sealing lips **4** of the primary and secondary seals **33,34**. The last port **40** is used to introduce an amount of non-pressurized lubricating medium into the inter-seal cavity **43** to aid lubrication of the tertiary forward facing seal **35** and the rear facing seal **36**. In use, the environmental pressure is stepped down in stages from seal **33** to **35** to ensure the pressure provided by the injecting fluid combined with back pressure from existing fluid and debris does not cause failure of any seal **33, 34 and 35**. This is achieved through known methods of injecting fluid at controlled pressures.

The functionality of the invention, in addition to the simplified, shallower spacer rings **16**, has enabled the housing length **44** (figure 4) required for a traditional arrangement at a given environmental pressure to be reduced significantly as seen at **45** (figure 5) for a sealing arrangement based upon the invention, at the same external pressure.

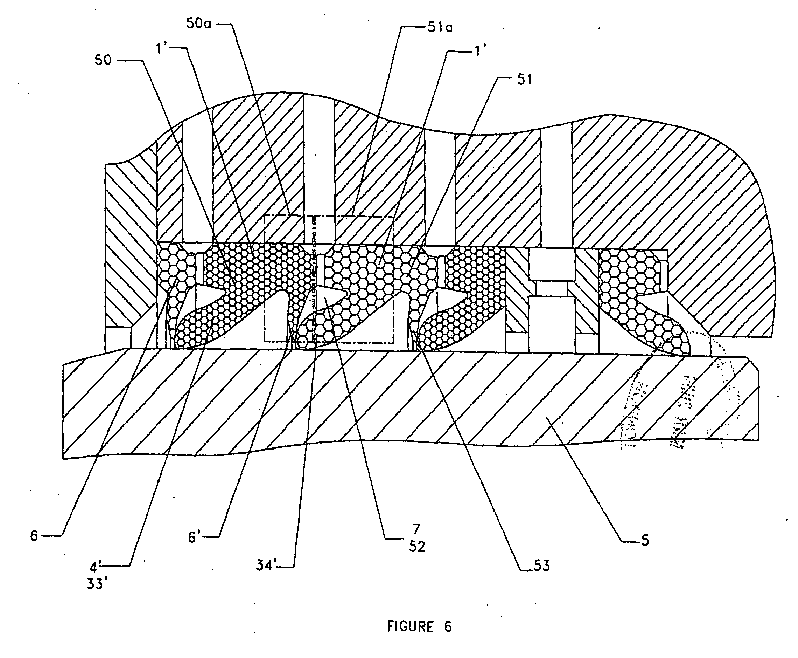

Figure 6 illustrates an alternative embodiment of the seal according to the invention in use, where like reference numerals denote like parts. In this embodiment, in use, the principles of operation are the same as for the embodiment described above in reference to Figure 5. The differences lie in that the element is in the form of a unitary annular ring **1'**. Unlike the previously described embodiment, the primary lip **4'** and vent lip **6'** depending from an outer body portion **50** or **51** do not together form the space or groove **7**. Instead, as illustrated in Figure 6, the groove **7** is formed between primary and vent lips of adjacent annular rings **1'**. For example, groove **52** is formed between primary lip **34'** and vent lip **6'**.

In keeping with the scope of the invention, the sealing means in this embodiment may alternatively be considered as having two resilient annular members in the form of two body portions **51a** and **50a** which have a respective primary lip **34'** and vent lip **6'**, where the primary and vent lips **34'** and **6'** together define the groove **7**. In another alternative construction, the resilient annular sealing means may be considered as being in the form of two body portions **50** and **51**, from which depend respective primary and vent lips **34'** and **6'** together defining the groove **7**. In this construction, another vent lip **53** depends from body portion **51** on a side of primary lip **34'** being opposite body portion **50**, and another primary lip **33'** depends from body portion **50** on a side of the vent lip **6'** being opposite body portion **51**.

As illustrated in Figures 2, 3, 5 and 6, the seals **33** to **36** are arranged in an axial orientation with respect to the shaft **5.** In an alternative embodiment of the invention however the lip seals **33** to **36** are arranged as a face seal, being orientated in a radial direction with respect to the shaft **5.** In another alternative embodiment, the lip seals **33** to **36** extend, radially outwardly from a body portion for use in applications such as within a hollow shaft.

While the present invention has been described in its preferred embodiments, it is to be understood that the words which have been used are words of description rather than limitation and that changes may be made to the invention within the scope defined by the appended claims.

## Claims

1. A lip seal having a sealing lip (4) adapted for sealing engagement at an end (9) thereof with a relatively movable surface to separate a sealed region from an unsealed region, and a shield (6) coextensive with the sealing lip (4) on the unsealed side thereof to protect the sealing lip (4) from the unsealed region and to define a space (7) with the lip, and means permitting the injection under pressure of fluid into the space (7), the shield (6) having an end (8) disposed such that the fluid exits the space by passing between the lip and the shield end into the unsealed region, **characterised in that**: the shield (6) and sealing lip (4) are normally closed together, the fluid in use being injected at sufficient pressure to cause the shield and sealing lip to open and allow the fluid to flow towards the end (9) of the sealing lip (4).

2. A lip seal according to Claim 1, wherein the shield (6; 6') contacts the sealing lip (4) proximate the end (9) thereof, and in use flexes to allow the fluid to flow towards the end (9) of the sealing lip (4).

3. A lip seal according to Claim 1 or 2 comprising a first resilient member (2, 51) having said sealing lip (4; 4') and, adjacent to the first member (2), a second resilient member (3; 50) having said shield (6; 6').

4. A lip seal according to Claim 3, wherein the first member (51) comprises a further shield (53), the further shield (53) being positioned on the sealed side of the lip (34').

5. A lip seal according to Claim 3 or 4, wherein the second member (50) comprises a further lip (33'), the further lip being positioned on a side of the shield (6') remote from the first member (51).

6. A lip seal according to Claim 3, wherein the second member (50) is formed from a reinforced elastomer.

7. A lip seal according to any of Claims 3 to 6, wherein the first and second members are annular.

8. A lip seal according to Claim 7, comprising an outer diameter body portion from which the lip (4) and shield (6) extend radially inwardly.

9. A lip seal according to Claim 8, wherein the body portion is adapted for retention within a housing of a bore for a shaft (5).

10. A lip seal according to any preceding claim, wherein the means permitting injection is arranged to admit fluid between the shield and a grooved portion of the lip seal which defines in part the sealing lip.

11. A lip seal according to any preceding claim, comprising at least one port (13) extending through the lip seal and through which the fluid is injected.

12. A lip seal according to Claim 10, when dependent on Claim 7 or 8 wherein the at least one port (13) extends between the first and second annular members.

13. A seal assembly comprising at least one lip seal according to any preceding claim, disposed between relatively movable parts to define a sealed and an unsealed region.

14. A seal assembly according to Claim 13, wherein the relatively movable parts are substantially coaxial and are relatively movable by rotation and/or translation about or along said axis.

15. A seal assembly according to Claim 14, comprising a plurality of lip seals according to any preceding claim axially spaced along the axis of the relatively movable parts.

16. An element for use in a lip seal comprising:
a body portion;
a sealing lip (4) depending from the body portion, the sealing lip (4) being adapted for sealing engagement at an end (9) thereof with a relatively movable surface to separate a sealed region from an unsealed region; and
a shield (6) depending from the body portion, the shield (6) being coextensive with the sealing lip (4) and being disposed on the sealed side of the sealing lip (4), the element being configured to abut a further said element so that the shield (6) provides, with the lip (4) of the further element, a lip seal according to any of Claims 1 to 12.

17. A method of protecting a lip seal from contamination, the lip seal comprising resilient sealing means having a sealing lip (4) adapted for sealing engagement at an end (9) thereof with a relatively moving surface, the method comprising providing a shield (6) coextensive with the sealing lip (4), the shield (6) allowing fluid injected into a space (7) between the lip (4) and the shield (6) to exit the space (7) by passing between the lip end (9) and an end (8) of the shield (6), **characterised in that**: the shield (6) and sealing lip (4) are normally closed together, the fluid in use being injected at sufficient pressure to cause the shield and sealing lip to open and allow the fluid to flow towards the end (9) of the sealing lip (4).

18. The method of Claim 17 wherein the shield (6) restricts material from crossing the shield end (8) into the space (7).

## Patentansprüche

1. Lippendichtung, umfassend eine dichtende Lippe (4), welche für einen dichtenden Eingriff an einem Ende (9) hiervon mit einer relativ bewegbaren Oberfläche angepasst ist, um einen abgedichteten Bereich von einem nicht abgedichteten Bereich abzutrennen, und eine Abschirmung (6), die koextensiv mit der Lippendichtung (4) auf der nicht abgedichteten Seite hiervon ist, um die Lippendichtung (4) vor dem nicht abgedichteten Bereich zu schützen, und mit der Lippe einen Zwischenraum (7) festzulegen, und Mittel, welches die Injektion unter Druck von Flüssigkeit in den Zwischenraum (7) zulässt, wobei die Abschirmung (6) ein Ende (8) aufweist, welches so angeordnet ist, dass die Flüssigkeit den Zwischenraum verlässt, indem sie zwischen der Lippe und dem Ende der Abdichtung in den nicht abgedichteten Bereich gelangt, **dadurch gekennzeichnet, dass**: die Abschirmung (6) und die Lippendichtung (4) normalerweise gemeinsam verschlossen sind, wobei die verwendete Flüssigkeit mit einem ausreichenden Druck injiziert wird, um zu bewirken, dass sich die Abschirmung und die Lippendichtung öffnen, und es der Flüssigkeit ermöglichen, in Richtung des Endes (9) der abdichtenden Lippe (4) zu fließen.

2. Lippendichtung gemäß Anspruch 1, wobei die Abschirmung (6; 6') die abdichtende Lippe (4) nahe dem Ende (9) hiervon berührt, und sich im Einsatz biegt, um es der Flüssigkeit zu ermöglichen, in Richtung des Endes (9) der abdichtenden Lippe (4) zu fließen.

3. Lippendichtung gemäß Anspruch 1 oder 2, welche ein erstes elastisches Glied (2, 51) umfasst, welches die abdichtende Lippe (4; 4') aufweist und an das erste Glied (2) angrenzt, und ein zweites elastisches Glied (3; 50), welches die Abschirmung (6; 6') aufweist.

4. Lippendichtung gemäß Anspruch 3, wobei das erste Glied (51) eine weitere Abschirmung (53) umfasst, wobei die weitere Abschirmung (53) auf der abgedichteten Seite der Lippe (34') angebracht ist.

5. Lippendichtung gemäß Anspruch 3 oder 4, wobei das zweite Glied (50) eine weitere Lippe (33') umfasst, wobei die weitere Lippe an einer Seite der Abschirmung (6') angebracht ist, entfernt von dem ersten Glied (51).

6. Lippendichtung gemäß Anspruch 3, wobei das zweite Glied (50) aus einem verstärkten Elastomer ausgebildet ist.

7. Lippendichtung gemäß irgendeinem der Ansprüche 3 bis 6, wobei die ersten und zweiten Glieder ringförmig sind.

8. Lippendichtung gemäß Anspruch 7, welche einen Körperabschnitt mit einem äußeren Durchmesser umfasst, von welchem sich die Lippe (4) und die Abschirmung (6) radial nach innen erstrecken.

9. Lippendichtung gemäß Anspruch 8, wobei der Körperabschnitt innerhalb eines Gehäuses einer Bohrung für eine Welle (5) für eine Aufrecht- bzw. Beibehaltung angepasst ist.

10. Lippendichtung gemäß irgendeinem der vorangegangenen Ansprüche, wobei das Mittel, welches Injektion möglich macht, so angeordnet ist, um Flüssigkeit zwischen der Abschirmung und einem gerillten bzw. genuteten Abschnitt der Lippendichtung hereinzulassen, welcher teilweise die Lippendichtung festlegt bzw. begrenzt.

11. Lippendichtung gemäß irgendeinem der vorangegangenen Ansprüche, welche mindestens eine Öffnung bzw. Durchlassöffnung (13) umfasst, welche sich durch die Lippendichtung erstreckt und durch welche die Flüssigkeit injiziert wird.

12. Lippendichtung gemäß Anspruch 10, wenn von Anspruch 7 oder 8 abhängig, wobei sich die mindestens eine Öffnung bzw. Durchlassöffnung zwischen den ersten und zweiten ringförmigen Gliedern erstreckt.

13. Dichtungsaufbau, welcher mindestens eine Lippendichtung gemäß irgendeinem der vorangegangenen Ansprüche umfasst, und welcher zwischen relativ bewegbaren Teilen angebracht ist, um einen abgedichteten und einen nicht abgedichteten Bereich festzulegen bzw. abzugrenzen.

14. Dichtungsaufbau gemäß Anspruch 13, wobei die relativ bewegbaren Teile im Wesentlichen koaxial sind, und durch Rotation und/oder Translation über oder entlang der Achse relativ bewegbar sind.

15. Dichtungsaufbau gemäß Anspruch 14, welcher eine Vielzahl von Lippendichtungen gemäß irgendeinem der vorangegangenen Ansprüche umfasst, welche entlang der Achse der relativ bewegbaren Teile axial beabstandet sind.

16. Element zum Einsatz in einer Lippendichtung, welches folgendes umfasst:
einen Körperabschnitt;
eine Lippendichtung (4), welche von dem Körperabschnitt herabhängt bzw. daran gebunden ist, wobei die Lippendichtung (4) so angepasst ist, um an einem Ende (9) hiervon mit einer relativ bewegbaren Oberfläche im dichtenden Eingriff zu sein, um einen abgedichteten Bereich von einem nicht abgedichteten Bereich abzutrennen; und
eine Abschirmung (6), welche von dem Körperabschnitt herabhängt bzw. daran gebunden ist, wobei die Abschirmung (6) koextensiv mit der Lippendichtung (4) ist, und auf der abgedichteten Seite der Lippendichtung (4) angeordnet ist, wobei das Element so konfiguriert ist, dass es an ein weiteres Element anstößt, sodass die Abschirmung (6) mit der Lippe (4) des weiteren Elements eine Lippendichtung gemäß irgendeinem der Ansprüche 1 bis 12 bildet.

17. Verfahren, um eine Lippendichtung vor Verunreinigung zu schützen, wobei die Lippendichtung elastische Dichtungsmittel umfasst, welche eine Lippendichtung (4) aufweisen, welche so angepasst ist, um an einem Ende (9) hiervon mit einer relativ bewegbaren Oberfläche im dichtenden Eingriff zu sein, wobei das Verfahren umfasst, dass eine Abschirmung (6) bereitstellt wird, welche koextensiv mit der Lippendichtung (4) ist, wobei es die Abschirmung (6) einer Flüssigkeit, welche in einen Zwischenraum (7) zwischen der Lippe (4) und der Abschirmung (6) injiziert wird, ermöglicht, den Zwischenraum (7) zu verlassen, indem sie zwischen dem Lippenende (9) und einem Ende (8) der Abschirmung (6) durchfließt, **dadurch gekennzeichnet: dass** die Abschirmung (6) und die Lippendichtung (4) normalerweise gemeinsam verschlossen sind, die verwendete Flüssigkeit mit einem ausreichenden Druck injiziert wird, um zu bewirken, dass sich die Abschirmung und die Lippendichtung öffnen, und es der Flüssigkeit ermöglichen, in Richtung des Endes (9) der Lippendichtung (4) zu fließen.

18. Verfahren von Anspruch 17, wobei die Abschirmung (6) Material davon abhält, über das Ende der Abschirmung (8) in den Zwischenraum (7) zu gelangen.

## Revendications

1. Joint à lèvre ayant une lèvre d'étanchéité (4) adaptée pour un engagement d'étanchéité à une extrémité (9) de celle-ci avec une surface relativement mobile pour séparer une zone hermétiquement fermée d'une zone ouverte, et une gaine isolante (6) de même étendue que la lèvre d'étanchéité (4) sur le côté ouvert de celle-ci, pour protéger la lèvre d'étanchéité (4) de la zone ouverte et pour définir un espace (7) avec la lèvre, ainsi que des moyens permettant l'injection sous pression de fluide dans l'espace (7), la gaine isolante (6) ayant une extrémité (8) disposée de manière à ce que le fluide quitte l'espace en passant entre la lèvre et l'extrémité de la gaine isolante dans la zone ouverte, **caractérisé en ce que** : la gaine isolante (6) et la lèvre d'étanchéité (4) sont normalement fermées l'une sur l'autre, le fluide utilisé étant injecté sous une pression suffisante pour amener la gaine isolante et la lèvre d'étanchéité à s'ouvrir et à permettre au fluide de s'écouler vers l'extrémité (9) de la lèvre d'étanchéité (4).

2. Joint à lèvre selon la revendication 1, dans lequel la gaine isolante (6, 6') entre en contact avec la lèvre d'étanchéité (4) à proximité de l'extrémité (9) de celle-ci, et fléchit à l'usage pour permettre au fluide de s'écouler vers l'extrémité (9) de la lèvre d'étanchéité (4).

3. Joint à lèvre selon la revendication 1 ou 2, comprenant un premier élément élastique (2, 51) comprenant ladite lèvre d'étanchéité (4, 4') et, de manière adjacente au premier élément (2), un second élément élastique (3, 50) comprenant ladite gaine isolante (6, 6').

4. Joint à lèvre selon la revendication 3, dans lequel le premier élément (51) comprend une gaine isolante supplémentaire (53), la gaine isolante supplémentaire (53) étant positionnée sur le côté hermétiquement fermé de la lèvre (34').

5. Joint à lèvre selon la revendication 3 ou 4, dans lequel le second élément (50) comprend une lèvre supplémentaire (33'), la lèvre supplémentaire étant positionnée sur un côté de la gaine isolante (6') éloigné du premier élément (51).

6. Joint à lèvre selon la revendication 3, dans lequel le second élément (50) est formé à partir d'un élastomère renforcé.

7. Joint à lèvre selon l'une quelconque des revendications 3 à 6, dans lequel le premier et le second élément sont annulaires.

8. Joint à lèvre selon la revendication 7, comprenant une partie formant corps de diamètre externe à partir de laquelle la lèvre (4) et la gaine isolante (6) s'étendent radialement vers l'intérieur.

9. Joint à lèvre selon la revendication 8, dans lequel la partie formant corps est adaptée pour retenir à l'intérieur d'un logement un alésage pour un arbre (5).

10. Joint à lèvre selon l'une quelconque des revendications précédentes, dans lequel les moyens permettant l'injection sont disposés de manière à admettre du fluide entre la gaine isolante et une partie rainurée du joint à lèvre qui définit en partie la lèvre d'étanchéité.

11. Joint à lèvre selon l'une quelconque des revendications précédentes, comprenant au moins un orifice (13) s'étendant à travers le joint à lèvre et à travers lequel est injecté le fluide.

12. Joint à lèvre selon la revendication 10 en ce qu'elle dépend de la revendication 7 ou 8, dans lequel le au moins un orifice (13) s'étend entre le premier et le second élément annulaire.

13. Structure formant joint comprenant au moins un joint à lèvre selon l'une quelconque des revendications précédentes, disposée entre des pièces relativement mobiles pour définir une zone hermétiquement fermée et une zone ouverte.

14. Structure formant joint selon la revendication 13, dans laquelle les pièces relativement mobiles sont sensiblement coaxiales et relativement mobiles par rotation et/ou translation autour ou le long dudit axe.

15. Structure formant joint selon la revendication 14, comprenant une pluralité de joints à lèvre selon l'une quelconque des revendications précédentes axialement espacés le long de l'axe des pièces relativement mobiles.

16. Elément à utiliser dans un joint à lèvre, comprenant :
une partie formant corps ;
une lèvre d'étanchéité (4) dépendant de la partie formant corps, la lèvre d'étanchéité (4) étant adaptée pour un engagement d'étanchéité à une extrémité (9) de celle-ci avec une surface relativement mobile pour séparer une zone hermétiquement fermée d'une zone ouverte ; et
une gaine isolante (6) dépendant de la partie formant corps, la gaine isolante (6) étant de même étendue que la lèvre d'étanchéité (4) et étant disposée sur le côté hermétiquement fermé de la lèvre d'étanchéité (4), l'élément étant configuré pour buter contre un dit élément supplémentaire de sorte à ce que la gaine isolante (6) forme, avec la lèvre (4) de l'élément supplémentaire, un joint à lèvre selon l'une quelconque des revendications 1 à 12.

17. Procédé destiné à protéger un joint à lèvre de la contamination, le joint à lèvre comprenant des moyens d'étanchéité élastiques comprenant une lèvre d'étanchéité (4) adaptée pour un engagement d'étanchéité à une extrémité (9) de celle-ci avec une surface relativement mobile, le procédé comprenant le positionnement d'une gaine isolante (6) de même étendue que la lèvre d'étanchéité (4), la gaine (6) permettant au fluide injecté dans un espace (7) entre la lèvre (4) et la gaine isolante (6) se quitter l'espace (7) en passant entre l'extrémité de la lèvre (9) et une extrémité (8) de la gaine isolante (6), **caractérisé en ce que** la gaine isolante (6) et la lèvre d'étanchéité (4) sont normalement fermées l'une sur l'autre, le fluide utilisé étant injecté sous une pression suffisante pour amener la gaine isolante et la lèvre d'étanchéité à s'ouvrir et à permettre au fluide de s'écouler vers l'extrémité (9) de la lèvre d'étanchéité (4).

18. Procédé selon la revendication 17, dans lequel la gaine isolante (6) restreint le passage de matériau à travers l'extrémité de la gaine isolante (8) à l'intérieur de l'espace (7).
